# EUROPÄISCHE PATENTSCHRIFT

(11) **EP 3 844 987 B1**
(45) Veröffentlichungstag und Bekanntmachung des Hinweises auf die Patenterteilung: **20.05.2026**
(21) Anmeldenummer: 19759366.8
(22) Anmeldetag: 27.08.2019
(51) Int. Cl.: H04W 4/40, H04L 9/40

(54) **VERFAHREN, VORRICHTUNG, FAHRZEUG UND COMPUTERPROGRAMM ZUM BEREITSTELLEN EINER KOMMUNIKATION FÜR EIN STEUERGERÄT EINES FAHRZEUGS**
METHOD, DEVICE, VEHICLE AND COMPUTER PROGRAM FOR PROVIDING COMMUNICATION FOR A CONTROL APPLIANCE OF A VEHICLE
PROCÉDÉ, DISPOSITIF, VÉHICULE ET PROGRAMME INFORMATIQUE DESTINÉS À METTRE EN OEUVRE UNE COMMUNICATION POUR UN APPAREIL DE COMMANDE D'UN VÉHICULE

(30) Priorität: 29.08.2018 DE 102018214686
(43) Veröffentlichungstag der Anmeldung: 07.07.2021
(73) Patentinhaber: VOLKSWAGEN AKTIENGESELLSCHAFT, 38440 Wolfsburg (DE)
(72) Erfinder: KLEINE, Ulrich, 38518 Gifhorn (DE); GIERDS, Christian, 10243 Berlin (DE); GELDNER, Anna-Katharina, 38444 Wolfsburg (DE)
(86) Internationale Anmeldenummer: PCT/EP2019/072768
(87) Internationale Veröffentlichungsnummer: WO 2020/043691

(56) Entgegenhaltungen:
- EP-A1- 2 892 201
- EP-A1- 3 240 260
- US-A1- 2018 205 703

## Beschreibung

Die vorliegende Erfindung bezieht sich auf eine Vorrichtung, ein Verfahren und ein Computerprogramm zum Bereitstellen einer Kommunikation für ein Steuergerät eines Fahrzeugs, auf ein Verfahren, eine Zentral-Vorrichtung und ein Computerprogramm zum Bereitstellen einer Aktualisierung, auf ein Steuergerät und ein Fahrzeug.

Fahrzeuge umfassen eine Vielzahl von verschiedenen Fahrzeugkomponenten - von den Antriebsmodulen wie dem Getriebe und dem Motor über Kommunikationsmodule wie einer Fahrzeug-zu-Fahrzeug-Kommunikationsschnittstelle oder einer Mobilfunkschnittstelle bis zu Komfortfunktionen wie Sitzheizungen. Viele dieser Fahrzeugkomponenten umfassen Steuergeräte oder werden durch Steuergeräte gesteuert. Diese Steuergeräte sind in modernen Fahrzeugen häufig über einen Fahrzeugkommunikationskanal, etwa einen Fahrzeugbus oder ein Fahrzeuginternes Netzwerk, miteinander verbunden. Durch die Verbindung der verschiedenen Steuergeräte über einen Fahrzeugkommunikationskanal entsteht in zumindest manchen Fällen ein Gefahrenpunkt, da ein Angreifer, der Zugriff auf den Fahrzeugkommunikationskanal erlangt, etwa durch Manipulation eines Steuergeräts, gegebenenfalls auch andere Steuergeräte kompromittieren kann.

Die Internationale Patentanmeldung WO 2018/077528 A1 offenbart eine Erkennung von Manipulationen in einem CAN (engl. Controller Area Network, Kontrollnetzwerk)-Netzwerk mittels Überprüfung von CAN-Identifiern (engl. für Identifikatoren). Dabei wird durch die Überprüfung von CAN-Identifiern überprüft, ob Nachrichten, die ein Steuergerät empfängt, von einem kompromittierten Gerät oder von einer bösartigen Entität gesendet wurden. Dies ermöglicht zwar eine Erkennung von bösartigen Paketen, jedoch muss dieser Erkennung von allen Steuergeräten durchgeführt werden, was eine Aktualisierung der Firmware der Steuergeräte bei jeder Änderung eines Steuergeräts des Fahrzeugs nach sich ziehen kann. Aus EP 2 892 201 A1 ist ein sogenannter "Detective Watchman" (Detektiv-Wachmann) bekannt, der genutzt werden kann, um die Kommunikation auf einem Fahrzeugbus zu überwachen. Dazu kann der Wachmann zwischen Software-Prozessen, die auf dem Fahrzeug ausgeführt werden, und dem Fahrzeugbus, oder zwischen einem OBDII-Dongle und dem Fahrzeugbus, angeordnet werden. Basierend auf einem Regelwerk erlaubt oder verhindert der Wachmann dann eine Kommunikation auf dem Fahrzeugbus. Allerdings ist der Wachmann als eine Software-Lösung beschrieben, der zentral auf einem QNX, Linux oder Android-System des Fahrzeugs ausgeführt wird, und der zentral im Fahrzeug verwaltet wird, inklusive Aktualisierungen des Regelwerks. Es besteht daher der Bedarf nach einem verbesserten Kommunikations-Konzept für eine Kommunikation zwischen Steuergeräten eines Fahrzeugs, das eine erhöhte Sicherheit gegenüber Angreifern bietet.

Diesem Bedarf wird durch die Vorrichtungen, Verfahren, das Computerprogramm, das Steuergerät und das Fahrzeug der unabhängigen Ansprüche Rechnung getragen.

Der Schutzumfang der Erfindung wird durch die unabhängigen Ansprüche definiert. Weitere Ausführungsformen der Erfindung werden durch die abhängigen Ansprüche definiert.

Zumindest einige Ausführungsbeispiele der Erfindung basieren darauf, dass zwischen einem Steuergerät und einem Fahrzeugkommunikationskanal eine weitere Vorrichtung eingeführt wird, die die Kommunikation über den Fahrzeugkommunikationskanal für das Steuergerät bereitstellt und die unabhängig von dem Steuergerät ausgeführt ist, also beispielsweise nicht von diesem manipuliert werden kann. Dieser Vorrichtung umfasst Kommunikationsregeln über eine zulässige Kommunikation des Steuergeräts und kann basierend auf dieser Information entscheiden, welche Nachrichten des Steuergeräts über den Fahrzeugkommunikationskanal übertragen werden dürfen und welche Nachrichten, die über den Fahrzeugkommunikationskanal empfangen werden, dem Steuergerät übermittelt werden dürfen. Um die Trennung zwischen Steuergerät und dieser Vorrichtung zu erreichen ist in zumindest einigen Ausführungsbeispielen diese Vorrichtung entweder separat von dem Steuergerät implementiert, oder zumindest die Information über die zulässige Kommunikation wird vor einem Zugriff des Steuergeräts abgeschirmt. Aktualisierungen der Information über die zulässige Kommunikation werden dabei über den Fahrzeugkommunikationskanal und unabhängig von dem Steuergerät durchgeführt.

Ausführungsbeispiele schaffen ein Verfahren zum Bereitstellen einer Kommunikation für ein Steuergerät eines Fahrzeugs. Das Verfahren umfasst Bereitstellen einer Schnittstelle zur Kommunikation über einen Fahrzeugkommunikationskanal für das Steuergerät. Die Kommunikation basiert auf Information über zulässige Kommunikation des Steuergeräts über den Fahrzeugkommunikationskanal. Die Information über die zulässige Kommunikation umfasst ein oder mehrere Kommunikationsregeln bezüglich der Kommunikation des Steuergeräts über den Fahrzeugkommunikationskanal. Die Schnittstelle ist unabhängig von dem Steuergerät ausgeführt, so dass die Information über die zulässige Kommunikation vor einen Zugriff des Steuergeräts abgeschirmt ist. Das Verfahren umfasst ferner Erkennen einer Aktualisierungsnachricht in der Kommunikation über den Fahrzeugkommunikationskanal. Die Aktualisierungsnachricht bezieht sich auf die Information über die zulässige Kommunikation des Steuergeräts über den Fahrzeugkommunikationskanal. Das Verfahren umfasst Aktualisieren der Information über die zulässige Kommunikation basierend auf der Aktualisierungsnachricht. Das Aktualisieren der Information über die zulässige Kommunikation wird unabhängig von dem Steuergerät durchgeführt. Durch die Aktualisierung der Information über die zulässige Fahrzeugkommunikation über den Fahrzeugkommunikationskanal kann eine Vorrichtung, die die Kommunikation über den Fahrzeugkommunikationskanal für das Steuergerät bereitstellt, unabhängig von diesem aktualisiert werden, was es sowohl ermöglicht, diese Vorrichtung von dem Steuergerät abzuschotten, als auch, die Kommunikation des Steuergeräts unabhängig von einem Hersteller des Steuergeräts abzusichern.

In zumindest manchen Ausführungsbeispielen umfasst das Verfahren ferner ein Abschirmen der Information über die zulässige Kommunikation vor einem Zugriff des Steuergeräts. Dies kann es ermöglichen, dass die Kommunikation des Steuergeräts über den Fahrzeugkommunikationskanal selbst in dem Fall sicher ist, in dem das Steuergerät selbst kompromittiert ist. So kann beispielsweise verhindert werden, dass das Steuergerät über gefälschte Identifikatoren über den Fahrzeugkommunikationskanal kommuniziert. Beispielsweise kann das Abschirmen der Information über die zulässige Kommunikation ein Speichern der Information über die zulässige Kommunikation in einem geschützten Speicherbereich umfassen. Durch den geschützten Speicherbereich des Steuergeräts kann die Information über die zulässige Kommunikation in Ausführungsbeispielen abgesichert werden.

In zumindest einigen Ausführungsbeispielen kann das Aktualisieren der Information über die zulässige Kommunikation ferner ein Verifizieren der Aktualisierungsnachricht umfassen. So kann beispielsweise eine Kompromittierung der Kommunikation über den Fahrzeugkommunikationskanal durch eine gefälschte oder bösartige Aktualisierungsnachricht vermieden werden.

Beispielsweise kann das Verifizieren der Aktualisierungsnachricht auf einem kryptografischen Verfahren basieren. Das kryptografische Verfahren kann genutzt werden, um zu verifizieren, dass die Aktualisierungsnachricht aus einer vertrauenswürdigen Quelle stammt und/oder nicht auf dem Übertragungsweg manipuliert wurde.

Beispielsweise kann das Verifizieren der Aktualisierungsnachricht auf einem Anfrage-Antwort-Verfahren basieren. Das Verifizieren der Aktualisierungsnachricht kann ein Übermitteln einer Verifizierungs-Anfrage zu einer Zentralstelle des Fahrzeugs und ein Empfangen einer Verifizierungs-Antwort von der Zentralstelle des Fahrzeugs umfassen. Das Verifizieren kann auf der Verifizierungs-Anfrage und der Verifizierungs-Antwort basieren. So kann beispielsweise angefragt und/oder nachvollzogen werden, ob die Aktualisierungsnachricht wirklich von der Zentralstelle stammt.

Das Verfahren kann ferner ein Filtern der Kommunikation des Steuergeräts über den Fahrzeugkommunikationskanal über die Schnittstelle basierend auf der Information über zulässige Kommunikation umfassen. Durch das Filtern kann eine unautorisierte Kommunikation des Steuergeräts oder für das Steuergerät unterbunden werden.

In zumindest manchen Ausführungsbeispielen umfasst die Information über die zulässige Kommunikation Information über zumindest einen zulässigen Sende-Identifikator des Steuergeräts. Das Filtern der Kommunikation des Steuergeräts über den Fahrzeugkommunikationskanal kann ein Filtern einer ausgehenden Kommunikation des Steuergeräts über den Fahrzeugkommunikationskanal basierend auf der Information über den zumindest einen zulässigen Sende-Identifikator des Steuergeräts umfassen. So kann beispielsweise verhindert werden, dass das Steuergerät, in dem Fall, in dem es kompromittiert wurde, durch ein Fälschen seines Identifikators andere Steuergeräte fehlleiten kann.

In zumindest manchen Ausführungsbeispielen umfasst das Filtern der Kommunikation des Steuergeräts über den Fahrzeugkommunikationskanal ein Blockieren einer ausgehenden Kommunikation des Steuergeräts basierend auf der Information über den zumindest einen zulässigen Sende-Identifikator des Steuergeräts. So kann beispielsweise verhindert werden, dass das Steuergerät, in dem Fall, in dem es kompromittiert wurde, durch ein Fälschen seines Identifikators andere Steuergeräte fehlleiten kann.

In zumindest manchen Ausführungsbeispielen kann die Information über die zulässige Kommunikation Information über zumindest einen zulässigen Empfangs-Identifikator des Steuergeräts umfassen. Das Filtern der Kommunikation des Steuergeräts über den Fahrzeugkommunikationskanal kann ein Filtern einer eingehenden Kommunikation für das Steuergerät basierend auf der Information über den zumindest einen zulässigen Empfangs-Identifikator des Steuergeräts umfassen. So kann beispielsweise verhindert werden, dass Nachrichten von Steuergeräten mit ungültigen Identifikatoren oder Nachrichten, die nicht an das Steuergerät gerichtet sind, von dem Steuergerät empfangen werden können.

In einigen Ausführungsbeispielen umfasst die Information über die zulässige Kommunikation zumindest ein Element der Gruppe von ein oder mehreren zulässigen Kommunikations-Identifikatoren für die Kommunikation des Steuergeräts über den Kommunikationskanal, ein oder mehreren unzulässigen Kommunikations-Identifikatoren für die Kommunikation über den Kommunikationskanal, eine zulässige Wiederholrate von Nachrichten für die Kommunikation über den Kommunikationskanal, ein zulässiger Datendurchsatz für die Kommunikation über den Kommunikationskanal, eine zulässige Nachrichtengröße für die Kommunikation über den Kommunikationskanal, ein zulässiges Format von Nachrichten für die Kommunikation über den Kommunikationskanal, eine zulässige Priorität von Nachrichten für die Kommunikation über den Kommunikationskanal und zulässige Kopfdateninformationen von Nachrichten für die Kommunikation über den Kommunikationskanal. Diese Parameter können genutzt werden, um zulässige von unzulässiger Kommunikation zu unterscheiden.

Ausführungsbeispiele schaffen ferner ein Programm mit einem Programmcode zum Durchführen zumindest eines der Verfahren, wenn der Programmcode auf einem Computer, einem Prozessor, einem Controller oder einer programmierbaren Hardwarekomponente ausgeführt wird.

Ausführungsbeispiele schaffen ferner eine Vorrichtung zum Bereitstellen einer Kommunikation für ein Steuergerät eines Fahrzeugs. Die Vorrichtung umfasst eine erste Schnittstelle ausgebildet zur Kommunikation über einen Fahrzeugkommunikationskanal des Fahrzeugs. Die Vorrichtung umfasst ferner eine zweite Schnittstelle ausgebildet zur Kommunikation mit dem Steuergerät. Die Vorrichtung umfasst ein Kontrollmodul. Das Kontrollmodul ist ausgebildet zum Bereitstellen einer Schnittstelle zur Kommunikation über einen Fahrzeugkommunikationskanal für das Steuergerät über die erste Schnittstelle und über die zweite Schnittstelle. Die Kommunikation basiert auf Information über zulässige Kommunikation des Steuergeräts über den Fahrzeugkommunikationskanal. Die Information über die zulässige Kommunikation umfasst ein oder mehrere Kommunikationsregeln bezüglich der Kommunikation des Steuergeräts über den Fahrzeugkommunikationskanal. Das Kontrollmodul ist ausgebildet, um die Schnittstelle unabhängig von dem Steuergerät auszuführen, so dass die Information über die zulässige Kommunikation vor einen Zugriff des Steuergeräts abgeschirmt ist. Das Kontrollmodul ist ausgebildet zum Erkennen einer Aktualisierungsnachricht in der Kommunikation über den Fahrzeugkommunikationskanal. Die Aktualisierungsnachricht bezieht sich auf die Information über die zulässige Kommunikation des Steuergeräts über den Fahrzeugkommunikationskanal. Das Kontrollmodul ist ausgebildet zum Aktualisieren der Information über die zulässige Kommunikation basierend auf der Aktualisierungsnachricht. Das Kontrollmodul ist ausgebildet, um das Aktualisieren der Information über die zulässige Kommunikation unabhängig von dem Steuergerät durchzuführen.

Ausführungsbeispiele schaffen ferner ein Steuergerät mit einer Vorrichtung zum Bereitstellen einer Kommunikation für ein Steuergerät eines Fahrzeugs. Das Kontrollmodul ist ausgebildet, um die Information über die zulässige Kommunikation vor einem Zugriff des Steuergeräts abzusichern. So kann verhindert werden, dass sich ein kompromittiertes Steuergerät unerlaubten Zugang zum Fahrzeugkommunikationskanal verschafft.

Ausführungsbeispiele schaffen ferner ein Fahrzeug mit einer Vorrichtung zum Bereitstellen einer Kommunikation für ein Steuergerät eines Fahrzeugs und dem Steuergerät. Die Vorrichtung ist separat von dem Steuergerät ausgeführt. So kann die Vorrichtung zum Bereitstellen einer Kommunikation für ein Steuergerät eines Fahrzeugs jeweils zwischen Steuergerät und Fahrzeugkommunikationskanal eingefügt werden, um eine Absicherung der Kommunikation der Steuergeräte verschiedener Zulieferer zu schaffen.

Ausführungsbeispiele schaffen ferner eine Zentral-Vorrichtung zum Bereitstellen einer Aktualisierung für eine Vorrichtung zum Bereitstellen einer Kommunikation für ein Steuergerät eines Fahrzeugs. Die Zentral-Vorrichtung umfasst eine Schnittstelle, ausgebildet zum Kommunizieren über einen Fahrzeugkommunikationskanal. Die Zentral-Vorrichtung umfasst ferner ein Kontrollmodul ausgebildet zum Bereitstellen einer Aktualisierungsnachricht für die Vorrichtung zum Bereitstellen der Kommunikation für ein Steuergerät über die Schnittstelle und den Fahrzeugkommunikationskanal. Die Aktualisierungsnachricht bezieht sich auf Information über eine zulässige Kommunikation des Steuergeräts über den Fahrzeugkommunikationskanal. Die Information über die zulässige Kommunikation umfasst ein oder mehrere Kommunikationsregeln bezüglich der Kommunikation des Steuergeräts über den Fahrzeugkommunikationskanal.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fign.: 1a und 1b zeigen Flussdiagramme von Ausführungsbeispielen eines Verfahrens zum Bereitstellen einer Kommunikation für ein Steuergerät eines Fahrzeugs;
- Fig. 1c: zeigt ein Blockdiagramm eines Ausführungsbeispiels einer Vorrichtung zum Bereitstellen einer Kommunikation für ein Steuergerät eines Fahrzeugs;
- Fig. 2a: zeigt ein Flussdiagramm eines Ausführungsbeispiels eines Verfahrens zum Bereitstellen einer Aktualisierung für eine Vorrichtung zum Bereitstellen einer Kommunikation für ein Steuergerät eines Fahrzeugs;
- Fig. 2b: zeigt ein Blockdiagramm eines Ausführungsbeispiels einer Zentral-Vorrichtung zum Bereitstellen einer Aktualisierung für eine Vorrichtung zum Bereitstellen einer Kommunikation für ein Steuergerät eines Fahrzeugs; und
- Fig. 3: zeigt ein schematisches Diagramm von Geräten, die über einen Fahrzeugkommunikationskanal eines Fahrzeugs kommunizieren.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

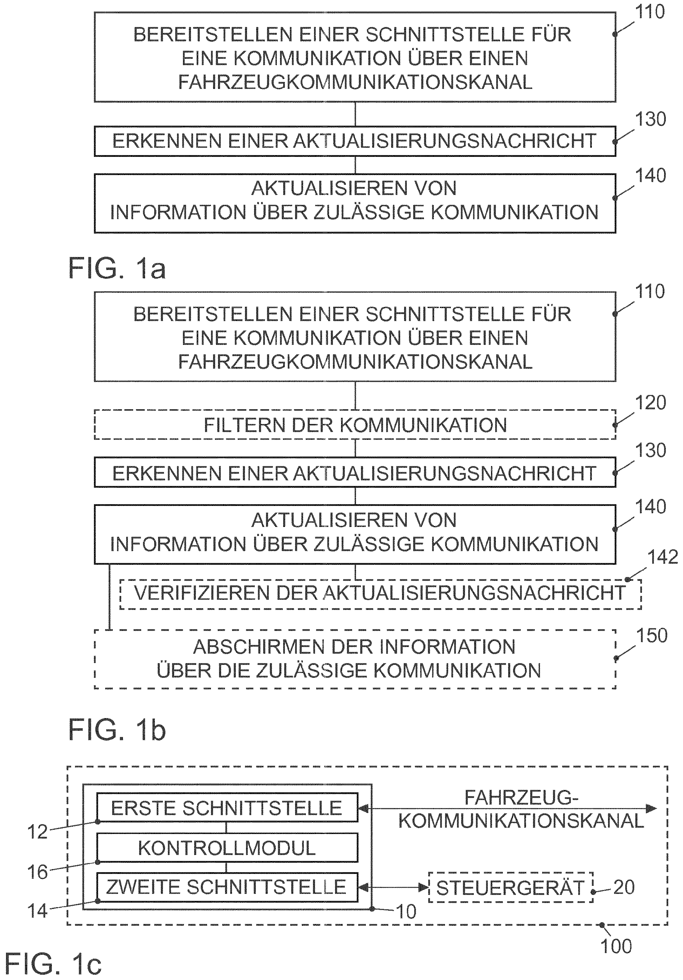

Fign. 1a und 1b zeigen Flussdiagramme von Ausführungsbeispielen eines Verfahrens zum Bereitstellen einer Kommunikation für ein Steuergerät 20 eines Fahrzeugs 100. Das Verfahren umfasst Bereitstellen 110 einer Schnittstelle zur Kommunikation über einen Fahrzeugkommunikationskanal für das Steuergerät 20. Die Kommunikation basiert auf Information über zulässige Kommunikation des Steuergeräts 20 über den Fahrzeugkommunikationskanal. Die Information über die zulässige Kommunikation umfasst ein oder mehrere Kommunikationsregeln bezüglich der Kommunikation des Steuergeräts 20 über den Fahrzeugkommunikationskanal. Die Schnittstelle ist unabhängig von dem Steuergerät 20 ausgeführt, so dass die Information über die zulässige Kommunikation vor einen Zugriff des Steuergeräts 20 abgeschirmt ist. Das Verfahren umfasst Erkennen 130 einer Aktualisierungsnachricht in der Kommunikation über den Fahrzeugkommunikationskanal. Die Aktualisierungsnachricht bezieht sich auf die Information über die zulässige Kommunikation des Steuergeräts 20 über den Fahrzeugkommunikationskanal. Das Verfahren umfasst Aktualisieren 140 der Information über die zulässige Kommunikation basierend auf der Aktualisierungsnachricht. Das Aktualisieren 140 der Information über die zulässige Kommunikation wird unabhängig von dem Steuergerät 20 durchgeführt.

Fig. 1c zeigt ein Blockdiagramm eines Ausführungsbeispiels einer entsprechenden Vorrichtung 10 zum Bereitstellen einer Kommunikation für ein Steuergerät 20 eines Fahrzeugs 100. Die Vorrichtung 10 umfasst eine erste Schnittstelle 12, ausgebildet zur Kommunikation über einen Fahrzeugkommunikationskanal des Fahrzeugs. Die Vorrichtung 10 umfasst ferner eine zweite Schnittstelle 14, ausgebildet zur Kommunikation mit dem Steuergerät 20. Die Vorrichtung 10 umfasst ferner ein Kontrollmodul 16, das mit der ersten Schnittstelle 12 und der zweiten Schnittstelle 14 gekoppelt ist. Das Kontrollmodul 16 kann ausgebildet sein, um die Verfahrensschritte des im Zusammenhang mit den Figuren 1a und 1b vorgestellten Verfahrens auszuführen. Das Kontrollmodul 16 ist ausgebildet zum Bereitstellen einer Schnittstelle zur Kommunikation über einen Fahrzeugkommunikationskanal für das Steuergerät 20 über die erste Schnittstelle 12 und über die zweite Schnittstelle 14. Die Kommunikation basiert auf Information über zulässige Kommunikation des Steuergeräts 20 über den Fahrzeugkommunikationskanal. Die Information über die zulässige Kommunikation umfasst ein oder mehrere Kommunikationsregeln bezüglich der Kommunikation des Steuergeräts 20 über den Fahrzeugkommunikationskanal umfasst. Das Kontrollmodul 16 ist ausgebildet, um die Schnittstelle unabhängig von dem Steuergerät 20 auszuführen, so dass die Information über die zulässige Kommunikation vor einen Zugriff des Steuergeräts 20 abgeschirmt ist. Das Kontrollmodul 16 ist ausgebildet zum Erkennen einer Aktualisierungsnachricht in der Kommunikation über den Fahrzeugkommunikationskanal. Die Aktualisierungsnachricht bezieht sich auf die Information über die zulässige Kommunikation des Steuergeräts 20 über den Fahrzeugkommunikationskanal. Das Kontrollmodul ist ausgebildet zum Aktualisieren der Information über die zulässige Kommunikation basierend auf der Aktualisierungsnachricht. Das Kontrollmodul 16 ist ausgebildet, um das Aktualisieren der Information über die zulässige Kommunikation unabhängig von dem Steuergerät durchzuführen. Fig. 1c zeigt ferner das Fahrzeug 100 mit der Vorrichtung 10 und einem Steuergerät 20, wobei die Vorrichtung 10 separat von dem Steuergerät 20 ausgeführt ist.

Zumindest einige Ausführungsbeispielen befassen sich mit einer Bereitstellung einer Kommunikation über einen Fahrzeugkommunikationskanal für ein Steuergerät eines Fahrzeugs. Steuergeräte eines Fahrzeugs sind im Allgemeinen Vorrichtungen, die dazu ausgebildet sind, um Fahrzeugkomponenten eines Fahrzeugs zu steuern und/oder zu überwachen. Die Steuergeräte sind dabei meist von den Fahrzeugkomponenten umfasst. In zumindest einigen Ausführungsbeispielen ist ein Steuergerät (genau) einer Fahrzeugkomponente zugeordnet. Die Fahrzeugkomponenten werden dabei häufig von Zulieferern gefertigt, wobei die Steuergeräte der Fahrzeugkomponenten von den Zulieferern programmiert und eingestellt werden. Um eine vollständige Funktionalität der Fahrzeugkomponenten zu ermöglichen, werden die Steuergeräte meist mit einer zentralen Instanz des Fahrzeugs verbunden, etwa über einen Fahrzeugkommunikationskanal, die Befehle für die Fahrzeugkomponente an das Steuergerät der Fahrzeugkomponente des Fahrzeugs übermittelt und/oder Zustandsinformation der Fahrzeugkomponente von dem Steuergerät erhält. Wird ein Steuergerät kompromittiert, so kann in manchen Systemen eine Kompromittierung anderer Steuergeräte über den Fahrzeugkommunikationskanal erfolgen. Zumindest manche Ausführungsbeispiele sind darauf gerichtet, eine solche Kompromittierung zu verhindern.

Das Verfahren umfasst ein Bereitstellen 110 einer Schnittstelle zur Kommunikation über einen Fahrzeugkommunikationskanal für das Steuergerät 20.. Das Bereitstellen 110 der Schnittstelle für die Kommunikation über den Fahrzeugkommunikationskanal kann es dem Steuergerät 20 ermöglichen, über den Fahrzeugkommunikationskanal zu kommunizieren. Beispielsweise kann das Bereitstellen 110 der Schnittstelle für die Kommunikation über den Fahrzeugkommunikationskanal ein Weiterleiten von Nachrichten des Fahrzeugkommunikationskanals für das Steuergerät 20 und ein Weiterleiten von Nachrichten des Steuergeräts 20 für den Fahrzeugkommunikationskanal (etwa für weitere Steuergeräte oder für eine zentrale Instanz des Fahrzeugs über den Fahrzeugkommunikationskanal) umfassen. Das Kontrollmodul 16 kann beispielsweise ausgebildet sein zum Bereitstellen der Schnittstelle für die Kommunikation über den Fahrzeugkommunikationskanal für das Steuergerät 20 über die erste Schnittstelle 12 und über die zweite Schnittstelle 14. Beispielsweise kann das Kontrollmodul 16 ausgebildet sein, um dem Steuergerät 20 über die zweite Schnittstelle 14 die Schnittstelle für den Fahrzeugkommunikationskanal bereitzustellen. Die Kommunikation des Steuergeräts 200 über die Schnittstelle für die Kommunikation über den Fahrzeugkommunikationskanal kann dabei über die erste Schnittstelle 12 geleitet werden. Beispielsweise kann das Kontrollmodul 16 ausgebildet sein, um Nachrichten des Fahrzeugkommunikationskanals für das Steuergerät 20 über die erste Schnittstelle 12 zu empfangen und über die zweite Schnittstelle 14 dem Steuergerät 20 weiterleiten. Das Kontrollmodul 16 kann ausgebildet sein, um Nachrichten des Steuergeräts 20 für den Fahrzeugkommunikationskanal (etwa für weitere Steuergeräte oder für eine zentrale Instanz des Fahrzeugs über den Fahrzeugkommunikationskanal) über die zweite Schnittstelle 14 zu empfangen und über die erste Schnittstelle 12 weiterzuleiten.

Die Schnittstelle für die Kommunikation des Steuergeräts 20 über den Fahrzeugkommunikationskanal ist unabhängig von dem Steuergerät 20 ausgeführt, so dass die Information über die zulässige Kommunikation vor dem (lesenden und/oder schreibenden) Zugriff des Steuergeräts abgeschirmt ist. In anderen Worten kann die Schnittstelle so bereitgestellt werden, dass dem Steuergerät 20 (lediglich) ermöglicht wird, die Schnittstelle für die Kommunikation über den Fahrzeugkommunikationskanal zu nutzen. Gleichzeitig kann die Schnittstelle so bereitgestellt werden, dass das Steuergerät 20 vor einer Kontrolle der Schnittstelle (etwa vor Veränderungen der Information über die zulässige Kommunikation) abgeschirmt ist. Beispielsweise kann die Schnittstelle von einer Entität, etwa von der Vorrichtung 10, bereitgestellt werden, die separat von dem Steuergerät 20 ausgeführt ist.

Der Fahrzeugkommunikationskanal kann beispielsweise ein Fahrzeugbus sein. Beispielsweise kann der Fahrzeugkomponenten dazu ausgelegt sein, eine Mehrzahl von Steuergeräten des Fahrzeugs 100 miteinander zu verbinden. In zumindest manchen Ausführungsbeispielen kann der Fahrzeugkommunikationskanal einem Element der Gruppe von CAN-Bus (Controller Area Network, Kontroll-Netzwerk-Bus), LIN (auch engl. Local Interconnected Network, Lokales zusammengeschaltetes Netzwerk), FlexRay, MOST (Media Oriented System Transport, Medienorientierter System-Transport), K-Line, SAE J1850 (Society of Automotive Engineers Standard J1850, Gesellschaft der Automobilingenieure) und Ethernet entsprechen. Die erste Schnittstelle 12 kann ausgebildet sein, um über zumindest ein Element der Gruppe von CAN-Bus, LIN, FlexRay, MOST, K-Line, SAE J1850 und Ethernet zu kommunizieren.

Die Kommunikation des Steuergeräts 20 über den Fahrzeugkommunikationskanal basiert auf der Information über die zulässige Kommunikation des Steuergeräts über den Fahrzeugkommunikationskanal. In anderen Worten wird die Kommunikation des Steuergeräts 20 über den Fahrzeugkommunikationskanal bereitgestellt, soweit es die Information über die zulässige Kommunikation zulässt. Die Information über die zulässige Kommunikation umfasst ein oder mehrere Kommunikationsregeln (etwa Filterregeln) bezüglich der Kommunikation des Steuergeräts 20 über den Fahrzeugkommunikationskanal. Die Kommunikation des Steuergeräts 20 über den Fahrzeugkommunikationskanal kann basierend auf den ein oder mehreren Kommunikationsregeln eingeschränkt, überwacht und/oder gefiltert werden. In manchen Ausführungsbeispielen umfasst das Verfahren ein Filtern 120 (etwa Überwachen) der Kommunikation des Steuergeräts 20 über den Fahrzeugkommunikationskanal basierend auf Information über zulässige Kommunikation. Eine Kommunikation über den FahrzeugKommunikationskanal kann beispielsweise auf Kommunikations-Identifikatoren basieren. Die Kommunikations-Identifikatoren können beispielsweise eine Quelle (Sende-Identifikator) und/oder ein Ziel einer Nachricht (Empfangs-Identifikator) definieren. Die Information über die zulässige Kommunikation kann beispielsweise definieren, welche Kommunikations-Identifikatoren für die Kommunikation des Steuergeräts 20 über den Fahrzeugkommunikationskanal zulässig sind (oder nicht zulässig sind). Beispielsweise kann die Information über die zulässige Kommunikation Information über zumindest einen zulässigen Sende-Identifikator des Steuergeräts 20 und/oder Information über zumindest einen zulässigen Empfangs-Identifikator des Steuergeräts 20 umfassen. Zusätzlich kann die Information über die zulässige Kommunikation Information über Sende-Identifikatoren umfasst, denen es gestattet ist, Nachrichten an das Steuergerät 20 zu übermitteln. Die Kommunikations-Identifikatoren, etwa der Sende-Identifikator und/oder der Empfangs-Identifikator, können beispielsweise Identifikatoren (auch engl. Identifiers) eines CAN-Kommunikationsprotokolls entsprechen.

In zumindest manchen Ausführungsbeispielen umfasst die Information über die zulässige Kommunikation Information über zumindest einen zulässigen Sende-Identifikator des Steuergeräts 20. Das Filtern 120 der Kommunikation des Steuergeräts 20 über den Fahrzeugkommunikationskanal kann ein Filtern einer ausgehenden Kommunikation des Steuergeräts 20 über den Fahrzeugkommunikationskanal basierend auf der Information über den zumindest einen zulässigen Sende-Identifikator des Steuergeräts 20 umfassen. Beispielsweise kann das Filtern 120 der Kommunikation des Steuergeräts 20 über den Fahrzeugkommunikationskanal umfassen, Nachrichten zu blockieren, die das Steuergerät 20 unter Nutzung eines unzulässigen Sende-Identifikators bereitstellt. Beispielsweise kann das Filtern 120 der Kommunikation des Steuergeräts 20 über den Fahrzeugkommunikationskanal ein Blockieren einer ausgehenden Kommunikation des Steuergeräts 20 basierend auf der Information über den zumindest einen zulässigen Sende-Identifikator des Steuergeräts 20 umfassen.

Zusätzlich oder alternativ kann das Filtern 120 der Kommunikation des Steuergeräts 20 über den Fahrzeugkommunikationskanal umfassen, nur Nachrichten, die einen (zulässigen) Empfangs-Identifikator für das Steuergerät 20 umfassen, an das Steuergerät 20 weiterleiten. Nachrichten, die nicht an das Steuergerät 20 gerichtet sind oder die keinen (zulässigen) Empfangs-Identifikator für das Steuergerät 20 umfassen, können blockiert und/oder nicht weitergeleitet werden. Beispielsweise kann die Information über die zulässige Kommunikation Information über zumindest einen zulässigen Empfangs-Identifikator des Steuergeräts 20 umfassen. Das Filtern 120 der Kommunikation des Steuergeräts 20 über den Fahrzeugkommunikationskanal kann ein Filtern einer eingehenden Kommunikation für das Steuergerät basierend auf der Information über den zumindest einen zulässigen Empfangs-Identifikator des Steuergeräts 20 umfasst. Das Filtern 120 der Kommunikation des Steuergeräts 20 über den Fahrzeugkommunikationskanal kann ein Blockieren oder nicht-Weiterleiten von Nachrichten, die nicht den zumindest einen zulässigen des Steuergeräts 20 umfassen, umfassen. In manchen Ausführungsbeispielen kann die Information über die zulässige Kommunikation ferner Information über ein oder mehrere zulässige Sende-Identifikatoren von weiteren Steuergeräten umfassen. Die Information über ein oder mehrere zulässige Sende-Identifikatoren von weiteren Steuergeräten kann beispielsweise Sende-Identifikatoren von ein oder mehreren weiteren Steuergeräten umfassen, die autorisiert sind, dem Steuergerät 20 Nachrichten über den Fahrzeugkommunikationskanal zu schicken. Das Filtern 120 der Kommunikation des Steuergeräts 20 über den Fahrzeugkommunikationskanal kann ein Filtern einer eingehenden Kommunikation für das Steuergerät basierend auf der Information über die ein oder mehreren zulässige Sende-Identifikatoren von weiteren Steuergeräten umfassen. Beispielsweise können Nachrichten für das Steuergerät, die von Steuergeräten stammen, deren Sende-Identifikatoren in der Information über die ein oder mehreren zulässige Sende-Identifikatoren von weiteren Steuergeräten umfasst sind, an das Steuergerät 20 weitergeleitet werden, und Nachrichten mit anderen Sende-Identifikatoren blockiert und/oder nicht weitergeleitet werden.

In zumindest manchen Ausführungsbeispielen umfasst die Information über die zulässige Kommunikation, etwa die ein oder mehreren Kommunikationsregeln, zumindest ein Element der Gruppe von ein oder mehreren zulässigen Kommunikations-Identifikatoren für die Kommunikation des Steuergeräts über den Kommunikationskanal, ein oder mehreren unzulässigen Kommunikations-Identifikatoren für die Kommunikation über den Kommunikationskanal, eine zulässige Wiederholrate von Nachrichten für die Kommunikation über den Kommunikationskanal, ein zulässiger Datendurchsatz für die Kommunikation über den Kommunikationskanal, eine zulässige Nachrichtengröße für die Kommunikation über den Kommunikationskanal, ein zulässiges Format von Nachrichten für die Kommunikation über den Kommunikationskanal, eine zulässige Priorität von Nachrichten für die Kommunikation über den Kommunikationskanal und zulässige Kopfdateninformationen von Nachrichten für die Kommunikation über den Kommunikationskanal.

Das Filtern 120 der Kommunikation des Steuergeräts 20 kann beispielsweise ein Weiterleiten oder Blockieren von Nachrichten des Steuergeräts 20 für den Fahrzeugkommunikationskanal basierend auf ein oder mehreren Elementen der Gruppe von eine zulässige Wiederholrate von Nachrichten für die Kommunikation über den Kommunikationskanal, ein zulässiger Datendurchsatz für die Kommunikation über den Kommunikationskanal, eine zulässige Nachrichtengröße für die Kommunikation über den Kommunikationskanal, ein zulässiges Format von Nachrichten für die Kommunikation über den Kommunikationskanal, eine zulässige Priorität von Nachrichten für die Kommunikation über den Kommunikationskanal und zulässige Kopfdateninformationen von Nachrichten für die Kommunikation über den Kommunikationskanal umfassen. Das Filtern der Kommunikation des Steuergeräts 20 kann beispielsweite ein Weiterleiten oder Blockieren von Nachrichten, die für das Steuergerät 20 bestimmt sind, basierend auf ein oder mehreren Elementen der Gruppe von eine zulässige Wiederholrate von Nachrichten für die Kommunikation über den Kommunikationskanal, ein zulässiger Datendurchsatz für die Kommunikation über den Kommunikationskanal, eine zulässige Nachrichtengröße für die Kommunikation über den Kommunikationskanal, ein zulässiges Format von Nachrichten für die Kommunikation über den Kommunikationskanal, eine zulässige Priorität von Nachrichten für die Kommunikation über den Kommunikationskanal und zulässige Kopfdateninformationen von Nachrichten für die Kommunikation über den Kommunikationskanal umfassen.

Beispielsweise kann das Verfahren ein Bestimmen einer Wiederholrate von Nachrichten, die von dem Steuergerät 20 stammen oder für das Steuergerät 20 bestimmt sind, umfassen. Das Verfahren kann ein Vergleichen der Wiederholrate von Nachrichten, die von dem Steuergerät 20 stammen oder für das Steuergerät 20 bestimmt sind, mit der zulässigen Wiederholrate von Nachrichten für die Kommunikation über den Kommunikationskanal umfassen.

Beispielsweise kann das Verfahren ein Bestimmen eines Datendurchsatzes von Nachrichten, die von dem Steuergerät 20 stammen oder für das Steuergerät 20 bestimmt sind, umfassen. Das Verfahren kann ein Vergleichen des Datendurchsatzes von Nachrichten, die von dem Steuergerät 20 stammen oder für das Steuergerät 20 bestimmt sind, mit dem zulässigen Datendurchsatz von Nachrichten für die Kommunikation über den Kommunikationskanal umfassen.

Beispielsweise kann das Verfahren ein Bestimmen einer Nachrichtengröße von Nachrichten, die von dem Steuergerät 20 stammen oder für das Steuergerät 20 bestimmt sind, umfassen. Das Verfahren kann ein Vergleichen der Nachrichtengröße von Nachrichten, die von dem Steuergerät 20 stammen oder für das Steuergerät 20 bestimmt sind, mit der zulässigen Nachrichtengröße von Nachrichten für die Kommunikation über den Kommunikationskanal umfassen.

Beispielsweise kann das Verfahren ein Bestimmen eines Nachrichtenformats von Nachrichten, die von dem Steuergerät 20 stammen oder für das Steuergerät 20 bestimmt sind, umfassen. Das Verfahren kann ein Vergleichen des Nachrichtenformats von Nachrichten, die von dem Steuergerät 20 stammen oder für das Steuergerät 20 bestimmt sind, mit dem zulässigen Format von Nachrichten für die Kommunikation über den Kommunikationskanal umfassen.

Beispielsweise kann das Verfahren ein Bestimmen einer Priorität (etwa eines Prioritäts-Identifikators, der in Kopfdaten einer Nachricht gespeichert ist) von Nachrichten, die von dem Steuergerät 20 stammen oder für das Steuergerät 20 bestimmt sind, umfassen. Das Verfahren kann ein Vergleichen der Priorität von Nachrichten, die von dem Steuergerät 20 stammen oder für das Steuergerät 20 bestimmt sind, mit der zulässigen Priorität von Nachrichten für die Kommunikation über den Kommunikationskanal umfassen.

Beispielsweise kann das Verfahren ein Bestimmen von Kopfdateninformationen von Nachrichten, die von dem Steuergerät 20 stammen oder für das Steuergerät 20 bestimmt sind, umfassen. Das Verfahren kann ein Vergleichen der Kopfdateninformationen von Nachrichten, die von dem Steuergerät 20 stammen oder für das Steuergerät 20 bestimmt sind, mit den zulässigen Kopfdateninformationen von Nachrichten für die Kommunikation über den Kommunikationskanal umfassen.

Das Verfahren umfasst Erkennen 130 einer Aktualisierungsnachricht in der Kommunikation über den Fahrzeugkommunikationskanal. Beispielsweise kann die Aktualisierungsnachricht einen Aktualisierungs-Identifikator umfassen. Das Erkennen 130 kann ein Erkennen des Aktualisierungs-Identifikators der Aktualisierungsnachricht umfassen. Umfasst eine Nachricht den Aktualisierungs-Identifikator, so kann das Verfahren diese als Aktualisierungsnachricht erkennen 130. In zumindest manchen Ausführungsbeispielen umfasst das Erkennen 130 der Aktualisierungsnachricht ein Prüfen, ob die Aktualisierungsnachricht sich auf die Information über die zulässige Kommunikation für das Steuergerät 20 bezieht und/oder umfasst. Eine Nachricht kann als Aktualisierungsnachricht erkannt werden, falls sich die Nachricht auf die Information über die zulässige Kommunikation für das Steuergerät 20 bezieht oder diese umfasst und/oder falls die Nachricht den Aktualisierungs-Identifikator umfasst. In zumindest manchen Ausführungsbeispielen ist der Aktualisierungs-Identifikator (nur) dem Steuergerät 20 zugeordnet. Beispielsweise können unterschiedlichen Steuergeräten des Fahrzeugs unterschiedliche Aktualisierungs-Identifikatoren zugordnet sind.

Das Verfahren umfasst ferner Aktualisieren 140 der Information über die zulässige Kommunikation basierend auf der Aktualisierungsnachricht. Beispielsweise kann die Aktualisierungsnachricht die gesamte Information über die zulässige Kommunikation umfassen. In diesem Fall kann das Aktualisieren der Information über die zulässige Kommunikation einem Austausch der Information über die zulässige Kommunikation durch die Information über die zulässige Kommunikation der Aktualisierungsnachricht entsprechen. Alternativ kann die Aktualisierungsnachricht einen aktualisierten Teil der Information über die zulässige Kommunikation umfassen. In diesem Fall kann das Aktualisieren der Information über die zulässige Kommunikation einem teilweisen Austausch der Information über die zulässige Kommunikation oder einem Ergänzen der Information über die zulässige Kommunikation durch die Information über die zulässige Kommunikation der Aktualisierungsnachricht entsprechen.

Das Aktualisieren 140 der Information über die zulässige Kommunikation wird unabhängig von dem Steuergerät 20 durchgeführt. In anderen Worten wird die Information über die zulässige Kommunikation durchgeführt, ohne dass ein Eingriff des Steuergeräts 20 möglich oder nötig ist. Beispielsweise kann das Verfahren ferner ein Abschirmen der Aktualisierung 140 der Information über die zulässige Kommunikation umfassen. Beispielsweise kann während der Aktualisierung der Information über die zulässige Kommunikation ein Zugriff des Steuergeräts 20 auf die Schnittstelle zur Kommunikation über den Fahrzeugkommunikationskanal blockiert oder verhindert werden.

In zumindest manchen Ausführungsbeispielen umfasst das das Aktualisieren 140 der Information über die zulässige Kommunikation, wie in Fig. 1b gezeigt, ferner ein Verifizieren 142 der Aktualisierungsnachricht. Beispielsweise kann das Verifizieren der Aktualisierungsnachricht einem Überprüfen, ob die Aktualisierungsnachricht valide ist, entsprechen. Die Aktualisierungsnachricht kann beispielsweise valide sein, falls sie von einer autorisierten Quelle für Aktualisierungsnachrichten stammt und falls sie nicht durch Dritte manipuliert wurde. Beispielsweise kann das Verifizieren 142 der Aktualisierungsnachricht auf einem kryptografischen Verfahren basiert. Beispielsweise kann zumindest ein Teil der Aktualisierungsnachricht basierend auf einem asymmetrischen oder symmetrischen kryptografischen Verfahren signiert oder verschlüsselt sein. In einem asymmetrischen Verfahren kann der Teil der Aktualisierungsnachricht basierend auf einem privaten Schlüssel (etwa eines Fahrzeugherstellers oder Komponentenherstellers des Fahrzeugs) signiert oder verschlüsselt sein. Das Verifizieren kann ein Überprüfen einer Signatur der Aktualisierungsnachricht oder ein Entschlüsseln des Teils der Aktualisierungsnachricht basierend auf einem öffentlichen Schlüssel (etwa des Fahrzeugherstellers oder Komponentenherstellers des Fahrzeugs) umfassen. In einem symmetrischen Verfahren kann symmetrischen Verfahren kann der Teil der Aktualisierungsnachricht basierend auf einem gemeinsamen Geheimnis signiert oder verschlüsselt sein. Das Verifizieren kann ein Überprüfen einer Signatur der Aktualisierungsnachricht oder ein Entschlüsseln des Teils der Aktualisierungsnachricht basierend auf dem gemeinsamen Geheimnis umfassen.

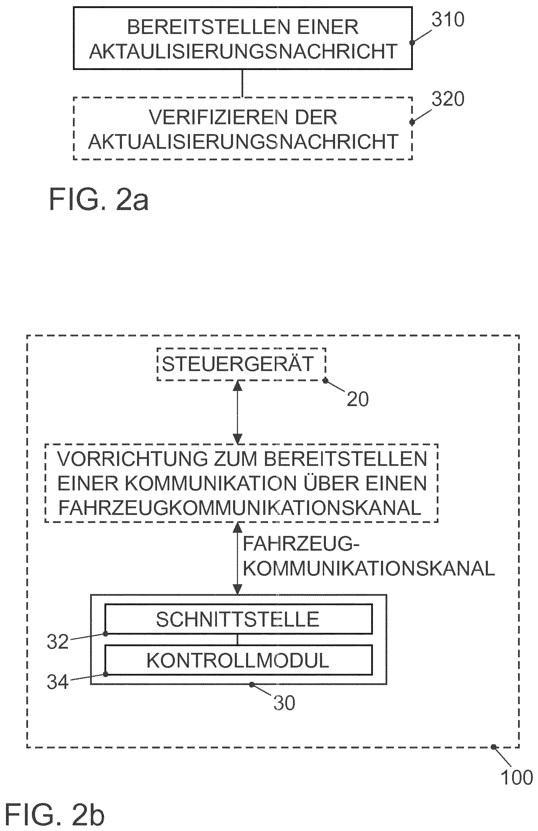

In zumindest einigen Ausführungsbeispielen basiert die Verifizierungs-Anfrage auf der Aktualisierungsnachricht. Beispielsweise kann die Verifizierungs-Anfrage die Aktualisierungsnachricht oder einen Teil der Aktualisierungsnachricht umfassen (etwa in verschlüsselter oder signierter Form). Alternativ oder zusätzlich kann die Verifizierungs-Anfrage einen Streuwert (auch engl. Hash-Wert) zumindest eines Teils der Aktualisierungsnachricht umfassen. Die Verifizierungs-Antwort kann Information darüber umfassen, ob die in der Verifizierungs-Anfrage umfasste Aktualisierungsnachricht/Teil der Aktualisierungsnachricht oder Streuwert zumindest eines Teils der Aktualisierungsnachricht von einer autorisierten Quelle für Aktualisierungsnachrichten (etwa einer Zentral-Vorrichtung 30, wie sie in Fig. 2b eingeführt wird) übertragen wurde.

In zumindest einigen Ausführungsbeispielen basiert das Verifizieren 142 der Aktualisierungsnachricht auf einem Anfrage-Antwort-Verfahren (auch engl. Challenge-Response-Verfahren). Das Verifizieren 142 der Aktualisierungsnachricht kann ein Übermitteln einer Verifizierungs-Anfrage zu einer Zentralstelle des Fahrzeugs und ein Empfangen einer Verifizierungs-Antwort von der Zentralstelle des Fahrzeugs umfassen. Das Verifizieren der Aktualisierungsnachricht kann auf der Verifizierungs-Anfrage und der Verifizierungs-Antwort basieren. Beispielsweise kann das Anfrage-Antwort-Verfahren auf einem kryptografischen Verfahren basieren. Beispielsweise kann die Verifizierungs-Antwort eine entschlüsselte Fassung der Verifizierungs-Anfrage umfassen. Alternativ kann die Verifizierungs-Antwort eine verschlüsselte Fassung der Verifizierungs-Anfrage umfassen. Alternativ oder zusätzlich kann die Verifizierungs-Antwort eine signierte Fassung der Verifizierungs-Anfrage umfassen. Das Anfrage-Antwort-Verfahren kann sowohl auf einem asymmetrischen kryptografischen Verfahren als auch auf einem symmetrischen kryptografischen Verfahren basieren.

Schlägt das Verifizieren 142 der Aktualisierungsnachricht fehl, so kann die Aktualisierungsnachricht ignoriert werden. Schlägt das Verifizieren 142 der Aktualisierungsnachricht mehrmals fehl (etwa mehrmals innerhalb eines vordefinierten Zeitintervalls), so können beispielsweise alle Aktualisierungsnachrichten bis zu einem Neustart des Fahrzeugs 100 ignoriert werden.

In manchen Ausführungsbeispielen umfasst das Verfahren ferner, wie in Fig. 1b gezeigt, Abschirmen 150 der Information über die zulässige Kommunikation vor einem Zugriff des Steuergeräts 20. Beispielsweise kann das Abschirmen 150 der Information über die zulässige Kommunikation vor einem Zugriff des Steuergeräts 20 ein Auslesen oder Manipulieren der Information über die zulässige Kommunikation durch das Steuergerät 20 verhindern oder erschweren. Beispielsweise kann das Abschirmen 150 der Information über die zulässige Kommunikation vor einem Zugriff des Steuergeräts 20 einen Zugriff des Steuergeräts 20 auf die Information über die zulässige Kommunikation über die zweite Schnittstelle 14 blockieren (oder erschweren). Das Abschirmen 150 der Information über die zulässige Kommunikation kann beispielsweise ein Speichern der Information über die zulässige Kommunikation in einem geschützten Speicherbereich umfassen. Das Verfahren kann ferner ein Schützen des geschützten Speicherbereichs basierend auf einem kryptografischen Verfahren umfassen. Beispielsweise kann das Abschirmen 150 der Information über die zulässige Kommunikation ein Verschlüsseln der Information über die zulässige Kommunikation oder ein Überwachen der Information über die zulässige Kommunikation basierend auf einer Streuwertfunktion (auch engl. Hash-Funktion) umfassen. In zumindest manchen Ausführungsbeispielen umfasst das Steuergerät 20 die Vorrichtung 10. Das Kontrollmodul 16 kann ausgebildet sein, um die Information über die zulässige Kommunikation vor einem Zugriff des Steuergeräts 20 abzuschirmen.

In zumindest manchen Ausführungsbeispielen kann das Fahrzeug 100 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Die erste Schnittstelle 12 und/oder die zweite Schnittstelle 14 (und eine Schnittstelle 32, die in Verbindung mit Fig. 2b eingeführt wird) kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

In Ausführungsbeispielen kann das Kontrollmodul 16 (und/oder ein Kontrollmodul 34, das in Verbindung mit Fig. 2b eingeführt wird) einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 16; 34 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16; 34 denkbar.

Mehr Details und Aspekte des Verfahrens und der Vorrichtung 10 werden in Verbindung mit dem Konzept oder Beispielen genannt, die vorher oder nachher (z.B. Fign. 2a bis 3) beschrieben werden. Die Vorrichtung 10 und das Verfahren können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 2a zeigt ein Flussdiagramm eines Ausführungsbeispiels eines Verfahrens zum Bereitstellen einer Aktualisierung für eine Vorrichtung 10 zum Bereitstellen einer Kommunikation für ein Steuergerät 20 eines Fahrzeugs 100. Das Verfahren umfasst Bereitstellen 310 einer Aktualisierungsnachricht für die Vorrichtung 10 zum Bereitstellen der Kommunikation für ein Steuergerät 20 über den Fahrzeugkommunikationskanal. Die Aktualisierungsnachricht bezieht sich auf Information über eine zulässige Kommunikation des Steuergeräts 20 über den Fahrzeugkommunikationskanal. Die Information über die zulässige Kommunikation umfasst ein oder mehrere Kommunikationsregeln bezüglich der Kommunikation des Steuergeräts 20 über den Fahrzeugkommunikationskanal. Beispielsweise kann das Verfahren von einer Zentral-Vorrichtung 30 des Fahrzeugs ausgeführt werden.

Fig. 2b zeigt ein Blockdiagramm eines Ausführungsbeispiels einer (entsprechenden) Zentral-Vorrichtung 30 zum Bereitstellen einer Aktualisierung für eine Vorrichtung 10 zum Bereitstellen einer Kommunikation für ein Steuergerät 20 eines Fahrzeugs 100. Die Zentral-Vorrichtung 30 umfasst eine Schnittstelle 32, ausgebildet zum Kommunizieren über einen Fahrzeugkommunikationskanal. Die Zentral-Vorrichtung 30 umfasst ein Kontrollmodul 34 ausgebildet zum Bereitstellen einer Aktualisierungsnachricht für die Vorrichtung 10 zum Bereitstellen der Kommunikation für ein Steuergerät 20 über die Schnittstelle 32 und den Fahrzeugkommunikationskanal. Die Aktualisierungsnachricht bezieht sich auf Information über eine zulässige Kommunikation des Steuergeräts 20 über den Fahrzeugkommunikationskanal. Die Information über die zulässige Kommunikation umfasst ein oder mehrere Kommunikationsregeln bezüglich der Kommunikation des Steuergeräts 20 über den Fahrzeugkommunikationskanal. Die Schnittstelle 32 ist mit dem Kontrollmodul 34 gekoppelt. Das Kontrollmodul 34 kann ferner ausgebildet sein, um weitere Verfahrensschritte des Verfahrens von Fig. 2a auszuführen. Fig. 2b zeigt ferner das Fahrzeug 100 umfassend die Vorrichtung 30, die Vorrichtung 10 und das Steuergerät 20.

In zumindest einigen Ausführungsbeispielen kann die Aktualisierungsnachricht von einer zentralen Entität des Fahrzeugs, etwa von einer Zentral-Vorrichtung 30, an die Vorrichtungen zum Bereitstellen einer Kommunikation für Steuergeräte (etwa das Steuergerät 20), bereitgestellt werden. Die Zentral-Vorrichtung 30 kann beispielsweise eine zentrale Verwaltungseinrichtung des Fahrzeugs sein. In manchen Ausführungsbeispielen kann die Zentral-Vorrichtung einer Verwaltungs-Vorrichtung für den Fahrzeugkommunikationskanal sein, etwa ein Gateway (engl. für Umsetzungseinheit) oder eine Sicherheitseinrichtung des Fahrzeugkommunikationskanals sein.

Das Verfahren umfasst Bereitstellen 310 einer Aktualisierungsnachricht für die Vorrichtung 10 zum Bereitstellen der Kommunikation für ein Steuergerät 20 über den Fahrzeugkommunikationskanal. Beispielsweise kann das Bereitstellen der Aktualisierung dem Bereitstellen 310 der Aktualisierungsnachricht entsprechen. Das Verfahren kann ein Übertragen der Aktualisierungsnachricht über den Fahrzeugkommunikationskanal umfassen. In zumindest einigen Ausführungsbeispielen können Aktualisierungsnachrichten für eine Mehrzahl von Steuergeräten (oder deren Vorrichtung zum Bereitstellen einer Kommunikation über den Fahrzeugkommunikationskanal) bereitgestellt werden. Die Aktualisierungsnachricht umfasst beispielsweise die Information über eine zulässige Kommunikation für das Steuergerät 20.

In manchen Ausführungsbeispielen umfasst das Verfahren ferner Verifizieren 320 der Aktualisierungsnachricht durch Empfangen einer Verifizierungs-Anfrage von der Vorrichtung, Überprüfen der Verifizierungs-Anfrage basierend auf der Aktualisierungsnachricht und Übermitteln einer Verifizierungs-Antwort zu der Vorrichtung, falls das Überprüfen der Verifizierungs-Anfrage erfolgreich ist. In zumindest einigen Ausführungsbeispielen kann die Verifizierungs-Anfrage verschlüsselt oder signiert sein. Das Überprüfen der Verifizierungs-Anfrage kann ein Überprüfen, ob die Verschlüsselung oder Signatur der Verifizierungs-Anfrage valide ist umfassen. Die Verschlüsselung oder Signatur der Verifizierungs-Anfrage kann valide sein, falls die Verschlüsselungs-Anfrage von der Vorrichtung 10 verschlüsselt oder signiert wurde und die Verschlüsselungs-Anfrage nicht nachträglich manipuliert wurde. Beispielsweise kann das Verfahren ein Bestimmen der Verifizierungs-Antwort basierend auf der Verifizierungs-Anfrage umfassen. Beispielsweise kann das Verfahren ein Entschlüsseln, Verschlüsseln oder Signieren der Verifizierungs-Anfrage zum Bestimmen der Verifizierungs-Antwort umfassen.

In zumindest einigen Ausführungsbeispielen basiert die Verifizierungs-Anfrage auf der Aktualisierungsnachricht. Beispielsweise kann die Verifizierungs-Anfrage die Aktualisierungsnachricht oder einen Teil der Aktualisierungsnachricht umfassen (etwa in verschlüsselter oder signierter Form), wie sie von der Vorrichtung 10 empfangen wurde. Alternativ oder zusätzlich kann die Verifizierungs-Anfrage einen Streuwert (auch engl. Hash-Wert) zumindest eines Teils der Aktualisierungsnachricht umfassen, wie sie von der Vorrichtung 10 empfangen wurde. Die Verifizierungs-Antwort kann Information darüber umfassen, ob die in der Verifizierungs-Anfrage umfasste Aktualisierungsnachricht/Teil der Aktualisierungsnachricht oder Streuwert zumindest eines Teils der Aktualisierungsnachricht der bereitgestellten 310 Aktualisierungsnachricht entspricht. Hat die Zentral-Vorrichtung 30 keine Aktualisierungsnachricht bereitgestellt 310, so ist die Verifizierung der Aktualisierungsnachricht nicht erfolgreich.

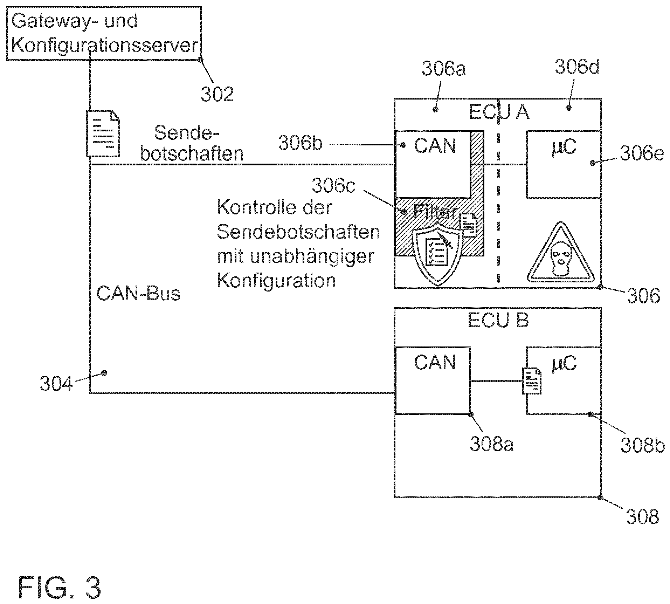

Mehr Details und Aspekte der Zentral-Vorrichtung 30 und des Verfahrens werden in Verbindung mit dem Konzept oder Beispielen genannt, die vorher oder nachher (z.B. Fign. 1a und 1b, 3) beschrieben wurden. Die Zentral-Vorrichtung 30 und das Verfahren können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 3 zeigt ein schematisches Diagramm von Geräten, die über einen Fahrzeugkommunikationskanal eines Fahrzeugs kommunizieren. Fig. 3 zeigt einen Gateway- und Konfigurationsserver 302, der etwa der Zentral-Vorrichtung 30 von Fig. 2b entsprechen kann. Dieser ist über einen CAN-Bus 304, der dem Fahrzeugkommunikationskanal entsprechen kann, mit einem ersten Steuergerät 306 und mit einem zweiten Steuergerät 308 verbunden. Das erste Steuergerät kann einem Steuergerät 20 aus Ausführungsbeispielen entsprechen. Das Steuergerät umfasst einen ersten Bereich 306a, der der Vorrichtung 10 aus Fig. 1c entsprechen kann, mit einem CAN-Kommunikationsmodul 306b, das etwa durch die erste Schnittstelle 12 gebildet sein kann, und einem Filter 306c, der durch das Kontrollmodul 16 gebildet sein kann. Das erste Steuergerät 306 umfasst ferner einen zweiten Bereich 306d, der dem Steuergerät 20 aus Ausführungsbeispielen entsprechen kann. Der zweite Bereich umfasst einen Mikrocontroller 306e, der mit dem ersten Bereich gekoppelt ist. Wie durch das Piktogramm gezeigt kann der zweite Bereich des ersten Steuergeräts kompromittiert sein. Im ersten Steuergerät erfolgt eine Kontrolle der Sendebotschaften, die über den CAN-Bus 306 gesendet werden, mit einer unabhängigen Konfiguration. Fig. 3 zeigt ferner das zweite Steuergerät 308 ohne eine solche Einteilung in einen ersten und einen zweiten Bereich. Das zweite Steuergerät umfasst ein CAN-Kommunikationsmodul 308a und einen Mikrocontroller 308b, der mit den CAN-Kommunikationsmodul 308a gekoppelt ist.

Mehr Details und Aspekte werden in Verbindung mit dem Konzept oder Beispielen genannt, die vorher oder nachher (z.B. Fign. 1a bis 2b) beschrieben wurden. Die Entitäten, die in Fig. 3 gezeigt sind, können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

### Ausführungsbeispiele schaffen einen über den Bus konfigurierbaren CAN-Controller

Zumindest manche Ausführungsbeispiele schaffen einen Hardware-Filter in CAN-Steuergeräten zur Vermeidung von Spoofing- (Vortäuschen einer falschen Identität) und Flooding-(Massenhaftes Senden von Nachrichten) Angriffen. In zumindest manchen anderen Systemen ist es nicht möglich, die Konfiguration des Filters so zu gestalten, dass sie flexibel zu Modellpflegen erfolgen kann und gleichzeitig unabhängig von der Lieferantenumsetzung ist. In solchen Systemen werden die Konfigurationen häufig durch die Steuergerätesoftware eingebracht und diese Filterung von innen kann potenziell Schwachstellen enthalten oder setzt eine hundertprozentige Vertrauenswürdigkeit des Lieferanten voraus.

Die CAN-Kommunikation wird in manchen Systemen über einen entsprechenden Datensatz, der im Steuergerät vorliegt, konfiguriert. Über diesen Datensatz kann der CAN-Empfangsfilter, aber auch der Umfang der zu sendenden CAN-Identifikatoren bestimmt werden. Die Software des Steuergeräts hat in solchen Systemen in der Regel volle Kontrolle über die Konfiguration.

Wenn die Konfiguration Teil der Steuergerätesoftware ist, hängt die korrekte Umsetzung von der Steuergerätesoftware ab. Da trotz intensiver Überprüfung der Software Probleme bzw. Schwachstellen nie ausgeschlossen sind, gibt es in solchen Systemen keine Garantie für die korrekte Umsetzung der Konfiguration. Zudem besteht für CAN in zumindest einigen Systemen kein generischer Weg, Konfigurationen für Steuergeräte zentral zu verwalten (z.B. im zentralen Vernetzungsgateway (engl. Gateway = Umsetzungseinheit)) und diese bei Bedarf an die Steuergeräte zu verteilen. Änderungen an den Kommunikationsbeziehungen in einem Fahrzeug könnten so einmal zentral aktualisiert und dann verteilt werden. Es besteht möglicherweise ferner die Gefahr, dass die schützenswerten Konfigurationsschlüssel verbreitet werden und die Vertraulichkeit nicht mehr gewährleistet werden kann.

Zumindest manche Ausführungsbeispiele schaffen eine unabhängige Kontrollinstanz (etwa die zum Bereitstellen einer Kommunikation für ein Steuergerät eines Fahrzeugs) zur Überprüfung und ggf. zum Verwerfen von CAN-Botschaften.

In manchen Ausführungsbeispielen lässt sich auch ein separates Steuergerät zur externen Filterung vor das betreffende Steuergerät anschließen oder es das Steuergerät kann auf einem separaten CAN isoliert werden und die Filterung kann im Gateway durchgeführt werden. Dies kann in manchen Varianten Mehrkosten verursachen, sowie den Bauraum einschränken. Zudem ist die Isolierung der Steuergeräte auf einen eigenen CAN durch die mögliche Anzahl an CAN-Controllern (Kontrollgeräten) auf den gängigen Mikrocontrollern begrenzt.

Zumindest manche Ausführungsbeispiele ermöglichen, durch die Übertragung der Aktualisierungen über den CAN-Bus, eine zentrale Verwaltung der CAN-Kommunikation, z.B. durch das Gateway. Damit kann ein Fahrzeughersteller im Fahrzeug einfach auf die Verschiebung von Funktionalität reagieren, ohne dass umfangreiche Updates an den Steuergeräten nötig sind. Zudem wird in vielen Ausführungsbeispielen die Konfiguration unabhängig von der Steuergerätesoftware und den potentiell dort befindlichen Schwachstellen. Die CAN-Hardware kann als geprüftes und zertifiziertes Pflichtbauteil gefordert werden.

Ausführungsbeispiele schaffen einen über den Bus konfigurierbaren Kommunikationscontroller für einen Fahrzeugkommunikationskanal, etwa ein CAN (Controller Area Network) oder ein MOST (Media Oriented System Transport). Zumindest manche Ausführungsbeispiele schaffen eine sichere, lieferantenunabhängige und flexible Einbringung einer Konfiguration in einer unabhängigen Kontrollinstanz.

Der Kommunikations-Controller in einer ECU (Electronic Control Unit, Elektronische Kontrolleinheit, ein Steuergerät) ist eine zentrale Schnittstelle zwischen Bauteil und einem Fahrzeugbus (einem Fahrzeugkommunikationskanal). Damit kann ihm eine zentrale Filteraufgabe obliegen was das Empfangen und Senden von Botschaften angeht. Diese Filterung hat Einfluss auf die Security-Bewertung der ECU, weshalb wir an die Konfiguration der Filterung entsprechende Security-Anforderungen stellen müssen. Wenn aus der ECU selbst die Konfiguration geändert werden könnte, könnten durch die ECU Nachrichten abgefangen bzw. gefälscht werden. Dies ist dann besonders kritisch wenn die ECU, ihre Software-Umgebung oder ihre Domäne (z.B. Infotainment-Online) nicht vertrauenswürdig sind. Die Idee von zumindest manchen Ausführungsbeispielen ist daher, die Konfiguration nicht von der ECU sondern unabhängig von dieser über den Bus durch das vertrauenswürdige System des OEM durchzuführen. Die ECU selbst hat in zumindest einigen Ausführungsbeispielen keine Möglichkeit die Konfiguration zu verändern.

Beispielsweise kann ein CAN-Controller (etwa die Vorrichtung zum Bereitstellen einer Kommunikation für ein Steuergerät eines Fahrzeugs) so gestaltet sein, dass er auf bestimmte CAN-Identifier (Identifikatoren) reagiert. Wenn die entsprechenden Botschaften (etwa die Aktualisierungsnachricht) auf dem CAN (etwa dem Fahrzeugkommunikationskanal) kommen, dann verarbeitet die CAN-Hardware die von außen eingebrachte Konfiguration und nutzt diese zur Konfigurierung einer Filterliste/Whitelist (Liste, in der erlaubte/zulässige Kommunikationsparameter eingetragen sind, etwa durch Aktualisieren der Information über die zulässige Kommunikation), d.h. wenn ein Steuergerät Botschaften senden will, die es laut Datenfestlegung nicht senden darf, werden diese z.B. durch einen Hardware-Filter blockiert (etwa durch die Überwachung der Kommunikation des Steuergeräts). Das Protokoll zur Übertragung kann dabei OEM-spezifisch sein, die CAN-Identifier zur Konfigurationsübertragung können statisch in der CAN-Hardware verankert sein.

Der Kommunikations-Controller kann beispielsweise dazu ausgelegt sein, eine Nutzung von sicheren Authentifizerungs- und Identifizierungsmechanismen zu unterstützen. Das Protokoll zur Übertragung kann dabei OEM-spezifisch (Original Equipment Manufacturer, Erstausrüster) sein, die Identifier zur Konfigurationsübertragung können beispielsweise statisch in der Controller-Hardware verankert sein. Zumindest einige Ausführungsbeispielen schaffen geeignete Szenarien zum Update (Aktualisieren) der Konfiguration (etwa der Information über die zulässige Kommunikation), z.B. Update der ECU-Software, um zu verhindern dass durch missbräuchliches Auslösen der Regelbetrieb des Fahrzeugs gestört wird. Beispielsweise kann der Kommunikations-Controller auf die Identifier zum Update mit einer Challenge (Aufforderung, eine entsprechende Antwort zu senden) an eine zentrale Einheit des Fahrzeugs. Bei mehrfach negativem Verlauf des C&R (Challenge-Response, Aufforderung-Antwort-Verfahren) kann die Updateanfrage z.B. bis zum nächsten Auslösen der Zünd-Klemme ignoriert werden. Bei der Übertragung über den Fahrzeugbus, kann eine zentrale Verwaltung der Kommunikation, z.B. durch das Gateway, ermöglicht werden. Damit kann ein Fahrzeughersteller im Fahrzeug einfach auf die Verschiebung von Funktionalität reagieren, ohne, dass umfangreiche Updates an den Steuergeräten nötig sind. Die Konfiguration kann unabhängig von der Steuergerätesoftware und den potentiell dort befindlichen Schwachstellen, werden d.h. wenn das Steuergerät selbst kompromittiert ist, kann eine Einflussnahme auf die Konfiguration verhindert werden und der Schutz der Konfiguration kann weiterhin gegeben sein. Die Controller-Hardware kann als geprüftes und zertifiziertes Pflichtbauteil gefordert werden.

Durch die Vorrichtung kann in zumindest manchen Ausführungsbeispielen ein separater Kommunikations-Controller von Steuergeräten, etwa Medien-Steuergeräten, überflüssig werden, weil der Schutz der Fahrzeugkommunikation in standardisierter Hardware des Controllers verlagert wird.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zum Bereitstellen einer Kommunikation für ein Steuergerät (20) eines Fahrzeugs, das Verfahren durchgeführt durch ein Kontrollmodul (16) einer Vorrichtung (10) des Steuergeräts (20), umfassend:
Bereitstellen (110) der Vorrichtung (10) umfassend eine Schnittstelle zur Kommunikation über einen Fahrzeugkommunikationskanal für das Steuergerät (20) über eine erste Schnittstelle (12) und über eine zweite Schnittstelle (14), wobei die Vorrichtung (10) von dem Steuergerät (20) umfasst ist, wobei sich das Kontrollmodul (16) zwischen der ersten Schnittstelle (12) und der zweiten Schnittstelle (14) befindet, wobei die erste Schnittstelle (12) die Verbindung zum Fahrzeugkommunikationskanal und die zweite Schnittstelle die Verbindung zum Steuergerät bereitstellt,
wobei die Kommunikation auf Information über zulässige Kommunikation des Steuergeräts (20) über den Fahrzeugkommunikationskanal basiert,
wobei die Information über die zulässige Kommunikation ein oder mehrere Kommunikationsregeln bezüglich der Kommunikation des Steuergeräts (20) über den Fahrzeugkommunikationskanal umfasst,
wobei die Schnittstelle unabhängig von dem Steuergerät (20) ausgeführt ist, wobei das Steuergerät (20) einen ersten Bereich (306a) und einen zweiten Bereich (306d) umfasst, wobei der erste Bereich (306a) zwischen dem Fahrzeugkommunikationskanal und dem zweiten Bereich (306d) angeordnet ist, wobei die Vorrichtung (10) dem ersten Bereich (306a) des Steuergeräts (20) entspricht, der erste Bereich (306a) umfassend ein CAN-Kommunikationsmodul (306b), das durch die erste Schnittstelle (12) ausgebildet ist, und einen Filter (306c), der durch das Kontrollmodul (16) ausgebildet ist, so dass die Information über die zulässige Kommunikation vor einem Zugriff des Steuergeräts (20) abgeschirmt ist, wobei der zweite Bereich (306d) einen Mikrocontroller (306e) umfasst, der mit dem ersten Bereich (306a) gekoppelt ist;
Erkennen (130) einer Aktualisierungsnachricht in der Kommunikation über den Fahrzeugkommunikationskanal, wobei sich die Aktualisierungsnachricht auf die Information über die zulässige Kommunikation des Steuergeräts (20) über den Fahrzeugkommunikationskanal bezieht; und
Aktualisieren (140) der Information über die zulässige Kommunikation basierend auf der Aktualisierungsnachricht, wobei das Aktualisieren (140) der Information über die zulässige Kommunikation unabhängig von dem Steuergerät (20) durchgeführt wird.

2. Das Verfahren gemäß Anspruch 1, ferner umfassend Abschirmen (150) der Information über die zulässige Kommunikation vor einem Zugriff des Steuergeräts (20), wobei das Abschirmen (150) der Information über die zulässige Kommunikation ein Speichern der Information über die zulässige Kommunikation in einem geschützten Speicherbereich umfasst.

3. Das Verfahren gemäß einem der vorherigen Ansprüche, wobei das Aktualisieren (140) der Information über die zulässige Kommunikation ferner ein Verifizieren (142) der Aktualisierungsnachricht umfasst.

4. Das Verfahren gemäß Anspruch 3, wobei das Verifizieren (142) der Aktualisierungsnachricht auf einem kryptografischen Verfahren basiert.

5. Das Verfahren gemäß einem der Ansprüche 3 oder 4, wobei das Verifizieren (142) der Aktualisierungsnachricht auf einem Anfrage-Antwort-Verfahren basiert,
und/oder wobei das Verifizieren (142) der Aktualisierungsnachricht ein Übermitteln einer Verifizierungs-Anfrage zu einer Zentralstelle des Fahrzeugs und ein Empfangen einer Verifizierungs-Antwort von der Zentralstelle des Fahrzeugs umfasst, wobei das Verifizieren auf der Verifizierungs-Anfrage und der Verifizierungs-Antwort basiert.

6. Das Verfahren gemäß einem der vorhergehenden Ansprüche, wobei das Verfahren ferner ein Filtern (120) der Kommunikation des Steuergeräts (20) über den Fahrzeugkommunikationskanal über die Schnittstelle basierend auf der Information über zulässige Kommunikation umfasst.

7. Das Verfahren gemäß Anspruch 6, wobei die Information über die zulässige Kommunikation Information über zumindest einen zulässigen Sende-Identifikator des Steuergeräts (20) umfasst,
wobei das Filtern (120) der Kommunikation des Steuergeräts (20) über den Fahrzeugkommunikationskanal ein Filtern einer ausgehenden Kommunikation des Steuergeräts (20) über den Fahrzeugkommunikationskanal basierend auf der Information über den zumindest einen zulässigen Sende-Identifikator des Steuergeräts (20) umfasst
und/oder wobei das Filtern (120) der Kommunikation des Steuergeräts (20) über den Fahrzeugkommunikationskanal ein Blockieren einer ausgehenden Kommunikation des Steuergeräts (20) basierend auf der Information über den zumindest einen zulässigen Sende-Identifikator des Steuergeräts (20) umfasst.

8. Das Verfahren gemäß einem der Ansprüche 6 oder 7 wobei die Information über die zulässige Kommunikation Information über zumindest einen zulässigen Empfangs-Identifikator des Steuergeräts (20) umfasst, wobei das Filtern (120) der Kommunikation des Steuergeräts (20) über den Fahrzeugkommunikationskanal ein Filtern einer eingehenden Kommunikation für das Steuergerät basierend auf der Information über den zumindest einen zulässigen Empfangs-Identifikator des Steuergeräts (20) umfasst.

9. Das Verfahren gemäß einem der vorherigen Ansprüche, wobei die Information über die zulässige Kommunikation zumindest ein Element der Gruppe von ein oder mehreren zulässigen Kommunikations-Identifikatoren für die Kommunikation des Steuergeräts über den Kommunikationskanal, ein oder mehreren unzulässigen Kommunikations-Identifikatoren für die Kommunikation über den Kommunikationskanal, eine zulässige Wiederholrate von Nachrichten für die Kommunikation über den Kommunikationskanal, ein zulässiger Datendurchsatz für die Kommunikation über den Kommunikationskanal, eine zulässige Nachrichtengröße für die Kommunikation über den Kommunikationskanal, ein zulässiges Format von Nachrichten für die Kommunikation über den Kommunikationskanal, eine zulässige Priorität von Nachrichten für die Kommunikation über den Kommunikationskanal und zulässige Kopfdateninformationen von Nachrichten für die Kommunikation über den Kommunikationskanal.

10. Programm mit einem Programmcode zum Durchführen zumindest eines der Verfahren gemäß einem der vorherigen Ansprüche, wenn der Programmcode auf einem Computer, einem Prozessor, einem Controller oder einer programmierbaren Hardwarekomponente ausgeführt wird.

11. Vorrichtung (10) eines Steuergeräts (20) zum Bereitstellen einer Kommunikation für das Steuergerät (20) eines Fahrzeugs (100), die Vorrichtung umfassend:
eine erste Schnittstelle (12), ausgebildet zur Kommunikation über einen Fahrzeugkommunikationskanal des Fahrzeugs; und
eine zweite Schnittstelle (14), ausgebildet zur Kommunikation mit dem Steuergerät (20); und
ein Kontrollmodul (16), wobei sich das Kontrollmodul (16)
zwischen der ersten Schnittstelle (12) und der zweiten Schnittstelle (14) befindet, wobei die erste Schnittstelle (12) die Verbindung zum Fahrzeugkommunikationskanal und die zweite Schnittstelle die Verbindung zum Steuergerät bereitstellt,
ausgebildet zum:
Bereitstellen einer Schnittstelle zur Kommunikation über einen Fahrzeugkommunikationskanal für das Steuergerät (20) über die erste Schnittstelle (12) und über die zweite Schnittstelle (14),
wobei die Kommunikation auf Information über zulässige Kommunikation des Steuergeräts (20) über den Fahrzeugkommunikationskanal basiert,
wobei die Information über die zulässige Kommunikation ein oder mehrere Kommunikationsregeln bezüglich der Kommunikation des Steuergeräts (20) über den Fahrzeugkommunikationskanal umfasst,
wobei das Kontrollmodul (16) ausgebildet ist, um die Schnittstelle unabhängig von dem Steuergerät (20) auszuführen, wobei das Steuergerät (20) einen ersten Bereich (306a) und einen zweiten Bereich (306d) umfasst, wobei der erste Bereich (306a) zwischen dem Fahrzeugkommunikationskanal und dem zweiten Bereich (306d) angeordnet ist, wobei die Vorrichtung (10) dem ersten Bereich (306a) des Steuergeräts (20) entspricht, der erste Bereich (306a) umfassend ein CAN-Kommunikationsmodul (306b), das durch die erste Schnittstelle (12) ausgebildet ist, und einen Filter (306c), der durch das Kontrollmodul (16) ausgebildet ist, dass die Information über die zulässige Kommunikation vor einem Zugriff des Steuergeräts (20) abgeschirmt ist, wobei der zweite Bereich (306d) einen Mikrocontroller (306e) umfasst, der mit dem ersten Bereich (306a) gekoppelt ist,
Erkennen einer Aktualisierungsnachricht in der Kommunikation über den Fahrzeugkommunikationskanal, wobei sich die Aktualisierungsnachricht auf die Information über die zulässige Kommunikation des Steuergeräts (20) über den Fahrzeugkommunikationskanal bezieht, und
Aktualisieren der Information über die zulässige Kommunikation basierend auf der Aktualisierungsnachricht, wobei das Kontrollmodul (16) ausgebildet ist, um das Aktualisieren der Information über die zulässige Kommunikation unabhängig von dem Steuergerät durchzuführen.

12. Ein Fahrzeug mit einer Vorrichtung (10) zum Bereitstellen einer Kommunikation für ein Steuergerät (20) eines Fahrzeugs (100) gemäß Anspruch 11 und einem Steuergerät (20), wobei die Vorrichtung (10) von dem Steuergerät (20) umfasst ist.

## Claims

1. A method for providing communication to a control unit (20) of a vehicle, the method being carried out by a control module (16) of a device (10) of the control unit (20), comprising:
providing (110) the device (10) comprising an interface for communication via a vehicle communication channel for the control unit (20) via a first interface (12) and via a second interface (14), wherein the device (10) is encompassed by the control unit (20), wherein the control module (16) is located between the first interface (12) and the second interface (14), wherein the first interface (12) provides the connection to the vehicle communication channel and the second interface provides the connection to the control unit,
wherein the communication is based on information about permissible communication of the control unit (20) via the vehicle communication channel,
wherein the information about the permissible communication includes one or more communication rules relating to the communication of the control unit (20) via the vehicle communication channel,
wherein the interface is implemented independently of the control unit (20), wherein the control unit (20) comprises a first region (306a) and a second region (306d), wherein the first region (306a) is arranged between the vehicle communication channel and the second region (306d), wherein the device (10) corresponds to the first region (306a) of the control unit (20), the first region (306a) comprising a CAN communication module (306b) formed by the first interface (12) and a filter (306c) formed by the control module (16) such that the information about the permissible communication is shielded from access by the control unit (20), wherein the second region (306d) comprises a microcontroller (306e) coupled to the first region (306a);
recognizing (130) an update message in the communication via the vehicle communication channel, wherein the update message relates to the information about the permissible communication of the control unit (20) via the vehicle communication channel; and
updating (140) the information about the permissible communication based on the update message, wherein updating (140) the information about the permissible communication is performed independently of the control unit (20).

2. The method according to claim 1, further comprising shielding (150) the information about the permissible communication from access by the control unit (20), wherein shielding (150) the information about the permissible communication comprises storing the information about the permissible communication in a protected memory region.

3. The method according to either of the preceding claims, wherein updating (140) the information about the permissible communication further comprises verifying (142) the update message.

4. The method according to claim 3, wherein verifying (142) the update message is based on a cryptographic method.

5. The method according to either claim 3 or claim 4, wherein verifying (142) the update message is based on a request-response method,
and/or wherein verifying (142) the update message includes transmitting a verification request to a central unit of the vehicle and receiving a verification response from the central unit of the vehicle, the verification being based on the verification request and the verification response.

6. The method according to any of the preceding claims, wherein the method further comprises filtering (120) the communication of the control unit (20) via the vehicle communication channel through the interface based on the information about permissible communication.

7. The method according to claim 6, wherein the information about the permissible communication comprises information about at least one permissible transmit identifier of the control unit (20),
wherein filtering (120) the communication of the control unit (20) via the vehicle communication channel comprises filtering an outgoing communication of the control unit (20) via the vehicle communication channel based on the information about the at least one permissible transmit identifier of the control unit (20)
and/or wherein filtering (120) the communication of the control unit (20) via the vehicle communication channel includes blocking outgoing communication of the control unit (20) based on the information about the at least one permissible transmit identifier of the control unit (20).

8. The method according to either claim 6 or claim 7 wherein the information about the permissible communication comprises information about at least one permissible receiver identifier of the control unit (20), wherein filtering (120) the communication of the control unit (20) via the vehicle communication channel comprises filtering an incoming communication for the control unit based on the information about the at least one permissible receiver identifier of the control unit (20).

9. The method according to any of the preceding claims, wherein the information about the permissible communication at least one element of the group of one or more permissible communication identifiers for the communication of the control unit via the communication channel, one or more impermissible communication identifiers for the communication via the communication channel, a permissible repetition rate of messages for the communication via the communication channel, a permissible data throughput for the communication via the communication channel, a permissible message size for the communication via the communication channel, a permissible format of messages for the communication via the communication channel, a permissible priority of messages for the communication via the communication channel, and permissible header information of messages for the communication via the communication channel.

10. A program having a program code for carrying out at least one of the methods according to any of the preceding claims when the program code is executed on a computer, a processor, a controller, or a programmable hardware component.

11. A device (10) of a control unit (20) for providing communication to the control unit (20) of a vehicle (100), the device comprising:
a first interface (12), designed for communication via a vehicle communication channel of the vehicle; and
a second interface (14), designed for communication with the control unit (20); and
a control module (16), wherein the control module (16) is located between the first interface (12) and the second interface (14), wherein the first interface (12) provides the connection to the vehicle communication channel and the second interface provides the connection to the control unit,
designed for:
providing an interface for communication via a vehicle communication channel for the control unit (20) via the first interface (12) and via the second interface (14),
wherein the communication is based on information about permissible communication of the control unit (20) via the vehicle communication channel,
wherein the information about the permissible communication includes one or more communication rules relating to the communication of the control unit (20) via the vehicle communication channel,
wherein the control module (16) is configured to implement the interface independently of the control unit (20), wherein the control unit (20) comprises a first region (306a) and a second region (306d), wherein the first region (306a) is arranged between the vehicle communication channel and the second region (306d), wherein the device (10) corresponds to the first region (306a) of the control unit (20), the first region (306a) comprising a CAN communication module (306b) formed by the first interface (12) and a filter (306c) formed by the control module (16) such that the information about the permissible communication is shielded from access by the control unit (20), wherein the second region (306d) comprises a microcontroller (306e) coupled to the first region (306a),
detecting an update message in the communication via the vehicle communication channel, wherein the update message relates to the information about the permissible communication of the control unit (20) via the vehicle communication channel, and
updating the information about the permissible communication based on the update message, wherein the control module (16) is configured to perform the updating of the information about the permissible communication independently of the control unit.

12. A vehicle having a device (10) for providing communication for a control unit (20) of a vehicle (100) according to claim 11 and a control unit (20), wherein the device (10) is encompassed by the control unit (20).

## Revendications

1. Procédé pour la fourniture d'une communication à un appareil de commande (20) d'un véhicule, le procédé étant mis en œuvre par un module de commande (16) d'un dispositif (10) de l'appareil de commande (20), comprenant :
la fourniture (110) du dispositif (10) comprenant une interface pour la communication par l'intermédiaire d'un canal de communication de véhicule pour l'appareil de commande (20) par l'intermédiaire d'une première interface (12) et par l'intermédiaire d'une seconde interface (14), dans lequel le dispositif (10) est compris par l'appareil de commande (20), dans lequel le module de commande (16) est situé entre la première interface (12) et la seconde interface (14), dans lequel la première interface (12) fournit la connexion au canal de communication de véhicule et la seconde interface fournit la connexion à l'appareil de commande,
dans lequel la communication est basée sur une information concernant une communication autorisée de l'appareil de commande (20) par l'intermédiaire du canal de communication de véhicule,
dans lequel l'information concernant la communication autorisée comprend une ou plusieurs règles de communication concernant la communication de l'appareil de commande (20) par l'intermédiaire du canal de communication de véhicule,
dans lequel l'interface est exécutée indépendamment de l'appareil de commande (20), dans lequel l'appareil de commande (20) comprend une première zone (306a) et une seconde zone (306d), dans lequel la première zone (306a) est disposée entre le canal de communication de véhicule et la seconde zone (306d), dans lequel le dispositif (10) correspond à la première zone (306a) de l'appareil de commande (20), la première zone (306a) comprenant un module de communication CAN (306b) réalisé par la première interface (12) et un dispositif de filtrage (306c) réalisé par le module de commande (16) de sorte que l'information concernant la communication autorisée est protégée contre un accès de l'appareil de commande (20), dans lequel la seconde zone (306d) comprend un microcontrôleur (306e) accouplé à la première zone (306a) ;
la détection (130) d'un message d'actualisation dans la communication par l'intermédiaire du canal de communication de véhicule, dans lequel le message d'actualisation se rapporte à l'information concernant la communication autorisée de l'appareil de commande (20) par l'intermédiaire du canal de communication de véhicule ; et
l'actualisation (140) de l'information concernant la communication autorisée sur la base du message d'actualisation, dans lequel l'actualisation (140) de l'information concernant la communication autorisée est mise en œuvre indépendamment de l'appareil de commande (20).

2. Procédé selon la revendication 1, comprenant en outre la protection (150) de l'information concernant la communication autorisée contre un accès de l'appareil de commande (20), dans lequel la protection (150) de l'information concernant la communication autorisée comprend un stockage de l'information concernant la communication autorisée dans une zone de stockage protégée.

3. Procédé selon l'une des revendications précédentes, dans lequel l'actualisation (140) de l'information concernant la communication autorisée comprend en outre une vérification (142) du message d'actualisation.

4. Procédé selon la revendication 3, dans lequel la vérification (142) du message d'actualisation est basée sur un procédé cryptographique.

5. Procédé selon l'une des revendications 3 ou 4, dans lequel la vérification (142) du message d'actualisation est basée sur un procédé de demande-réponse,
et/ou dans lequel la vérification (142) du message d'actualisation comprend une transmission d'une demande de vérification à un emplacement central du véhicule et une réception d'une réponse de vérification de l'emplacement central du véhicule, dans lequel la vérification est basée sur la demande de vérification et la réponse de vérification.

6. Procédé selon l'une des revendications précédentes, dans lequel le procédé comprend en outre un filtrage (120) de la communication de l'appareil de commande (20) par l'intermédiaire du canal de communication de véhicule par l'intermédiaire de l'interface sur la base de l'information concernant la communication autorisée.

7. Procédé selon la revendication 6, dans lequel l'information concernant la communication autorisée comprend une information concernant au moins un identifiant d'émission autorisé de l'appareil de commande (20),
dans lequel le filtrage (120) de la communication de l'appareil de commande (20) par l'intermédiaire du canal de communication de véhicule comprend un filtrage d'une communication sortante de l'appareil de commande (20) par l'intermédiaire du canal de communication de véhicule sur la base de l'information concernant l'au moins un identifiant d'émission autorisé de l'appareil de commande (20),
et/ou dans lequel le filtrage (120) de la communication de l'appareil de commande (20) par l'intermédiaire du canal de communication de véhicule comprend un blocage d'une communication sortante de l'appareil de commande (20) sur la base de l'information concernant l'au moins un identifiant d'émission autorisé de l'appareil de commande (20).

8. Procédé selon l'une des revendications 6 ou 7, dans lequel l'information concernant la communication autorisée comprend une information concernant au moins un identifiant de réception autorisé de l'appareil de commande (20), dans lequel le filtrage (120) de la communication de l'appareil de commande (20) par l'intermédiaire du canal de communication de véhicule comprend un filtrage d'une communication entrante pour l'appareil de commande sur la base de l'information concernant l'au moins un identifiant de réception autorisé de l'appareil de commande (20).

9. Procédé selon l'une des revendications précédentes, dans lequel l'information concernant la communication autorisée au moins un élément du groupe constitué d'un ou plusieurs identifiants de communication autorisés pour la communication de l'appareil de commande par l'intermédiaire du canal de communication, un ou plusieurs identifiants de communication non autorisés pour la communication par l'intermédiaire du canal de communication, un taux de répétition autorisé de messages pour la communication par l'intermédiaire du canal de communication, un débit de données autorisé pour la communication par l'intermédiaire du canal de communication, une taille de message autorisée pour la communication par l'intermédiaire du canal de communication, un format autorisé de messages pour la communication par l'intermédiaire du canal de communication, une priorité autorisée de messages pour la communication par l'intermédiaire du canal de communication et d'informations d'en-tête autorisées de messages pour la communication par l'intermédiaire du canal de communication.

10. Programme comportant un code de programme permettant de mettre en œuvre au moins un des procédés selon l'une des revendications précédentes lorsque le code de programme est exécuté sur un ordinateur, un processeur, un contrôleur ou un composant matériel programmable.

11. Dispositif (10) d'un appareil de commande (20) pour la fourniture d'une communication à l'appareil de commande (20) d'un véhicule (100), le dispositif comprenant :
une première interface (12), configurée pour communiquer par l'intermédiaire d'un canal de communication de véhicule du véhicule ; et
une seconde interface (14), configurée pour communiquer avec l'appareil de commande (20) ; et
un module de commande (16), dans lequel le module de commande (16) est situé entre la première interface (12) et la seconde interface (14), dans lequel la première interface (12) fournit la connexion au canal de communication de véhicule et la seconde interface fournit la connexion à l'unité de commande,
configuré pour :
fournir une interface pour la communication par l'intermédiaire d'un canal de communication de véhicule pour l'appareil de commande (20) par l'intermédiaire de la première interface (12) et par l'intermédiaire de la seconde interface (14),
dans lequel la communication est basée sur une information concernant une communication autorisée de l'appareil de commande (20) par l'intermédiaire du canal de communication de véhicule,
dans lequel l'information concernant la communication autorisée comprend une ou plusieurs règles de communication concernant la communication de l'appareil de commande (20) par l'intermédiaire du canal de communication de véhicule,
dans lequel le module de commande (16) est configuré pour exécuter l'interface indépendamment de l'appareil de commande (20), dans lequel l'appareil de commande (20) comprend une première zone (306a) et une seconde zone (306d), dans lequel la première zone (306a) est disposée entre le canal de communication de véhicule et la seconde zone (306d), dans lequel le dispositif (10) correspond à la première zone (306a) de l'appareil de commande (20), la première zone (306a) comprenant un module de communication CAN (306b) réalisé par la première interface (12) et un dispositif de filtrage (306c) réalisé par le module de commande (16) de sorte que l'information concernant la communication autorisée est protégée contre un accès de l'appareil de commande (20), dans lequel la seconde zone (306d) comprend un microcontrôleur (306e) accouplé à la première zone (306a),
détecter un message d'actualisation dans la communication par l'intermédiaire du canal de communication de véhicule, dans lequel le message d'actualisation se rapporte à l'information concernant la communication autorisée de l'appareil de commande (20) par l'intermédiaire du canal de communication de véhicule ; et
actualiser l'information concernant la communication autorisée sur la base du message d'actualisation, dans lequel le module de commande (16) est configuré pour mettre en œuvre l'actualisation de l'information concernant la communication autorisée indépendamment de l'appareil de commande.

12. Véhicule comportant un dispositif (10) pour la fourniture d'une communication à un appareil de commande (20) d'un véhicule (100) selon la revendication 11 et un appareil de commande (20), dans lequel le dispositif (10) est compris par l'appareil de commande (20).
